# EUROPEAN PATENT APPLICATION

(11) **EP 3 466 906 A1**
(43) Date of publication of application: **10.04.2019**
(21) Application number: 17810264.6
(22) Date of filing: 05.06.2017
(51) Int. Cl.: C04B 35/569, C04B 38/00, F28F 21/04

(54) **HONEYCOMB STRUCTURE**

(30) Priority: 06.06.2016 JP 2016112740
(71) Applicant: Ibiden Co., Ltd., Ogaki-shi, Gifu 503-8604 (JP)
(72) Inventor: KOGA, Yoshihiro, Ibi-gun Gifu 501-0695 (JP)
(74) Representative: Vigand, Philippe
(86) International application number: PCT/JP2017/020833
(87) International publication number: WO 2017/213088

(57) **Abstract**

This honeycomb structure is equipped with a cylindrical circumferential wall (11), and a cross-sectionally honeycomb-shaped partitioning wall (12) for partitioning the interior within the circumferential wall (11) into a plurality of cells (S) which extend in the axial direction of the circumferential wall (11). The partitioning wall (12) is configured from a framework section obtained by arranging a plurality of ceramic particles in a shape that corresponds to the shape of the partitioning wall (12), and a filler section comprising metallic silicon which fills the gaps between the ceramic particles in the framework section. Furthermore, the filler section holds the framework section in the shape that corresponds to the partitioning wall (12).

## Description

### TECHNICAL FIELD

The present invention relates to a honeycomb structure that includes partition walls forming a honeycomb-shaped cross-section inside a circumferential wall.

### BACKGROUND ART

Patent document 1 discloses a high-temperature heat exchanger that includes an element formed by a sintered porous silicon carbide body and transfers heat between a fluid flowing inside the element and a fluid existing outside the element. The element of the heat exchanger is a honeycomb structure including a plurality of cells extending in a longitudinal direction. The honeycomb structure is formed by impregnating the surfaces of the sintered porous silicon carbide body with silicon.

### PRIOR ART DOCUMENT

### PATENT DOCUMENT

Patent Document 1: Japanese Laid-Open Patent Publication No. 06-345555

### SUMMARY OF THE INVENTION

### PROBLEM TO BE SOLVED BY THE INVENTION

In the honeycomb structure, the temperature of the fluid passing through the cells causes strain on the partition walls forming the honeycomb-shaped cross-section. In particular, depending on the form of use, an increase in the difference in temperature inside the honeycomb structure increases strain. Accordingly, there is a need for a honeycomb structure that is resistant to strain.

### MEANS FOR SOLVING THE PROBLEM

A honeycomb structure that solves the above problem includes a tubular circumferential wall and partition walls forming a honeycomb-shaped cross-section and defining a plurality of cells extending inside the circumferential wall in an axial direction of the circumferential wall. The partition walls are constructed by a frame portion, formed by a plurality of ceramic particles arranged in a shape corresponding to the partition walls, and a filling portion, formed by metal silicon filling a gap between ceramic particles in the frame portion. The frame portion is maintained in a shape corresponding to the partition walls by the filling portion.

In the above honeycomb structure, it is preferable that the ceramic particles be non-sintered.

For example, in the honeycomb structure disclosed in patent document 1, the ceramic particles are linked by sintering. In contrast, in the above structure, the ceramic particles forming the shape of the frame portion are maintained by the filling member so that linking of the ceramic particles is limited. Such a structure is employed at the frame portion thereby improving resistance to strain. That is, the Young's modulus is increased.

In the above honeycomb structure, it is preferable that a volume ratio of the ceramic particles to the metal silicon be from 60:40 to 40:60. In a case where the rate of the ceramic particles is less than or equal to 60% by volume, the metal silicon easily enters the gaps between the ceramic particles and thus improves resistance to strain. In a case where the rate of the ceramic particles is more than or equal to 40% by volume, strength of the partition walls is sufficiently ensured even when not sintered.

In the above honeycomb structure, it is preferable that the ceramic particles be silicon carbide particles. In such a case, silicon carbide having a high thermal conductivity reduces the differences in temperature inside the honeycomb structure. Further, the honeycomb structure is useful as a heat exchanger.

### EFFECTS OF THE INVENTION

The honeycomb structure of the present invention succeeds in improving resistance to strain.

### BRIEF DESCRIPTION OF THE DRAWINGS

Fig. 1 is a perspective view of a honeycomb structure.
Fig. 2 is a cross-sectional view taken along line 2-2 in Fig. 1.
Fig. 3 is a cross-sectional view taken along line 3-3 in Fig. 1.
Fig. 4 is a photomicrograph of a non-sintered honeycomb structure.
Fig. 5 is a photomicrograph of a non-sintered honeycomb structure.
Fig. 6 is a photomicrograph of a sintered honeycomb structure.
Figs. 7(a) and 7(b) are enlarged schematic views of a frame portion.
Fig. 8 is a schematic view illustrating a molding process.
Fig. 9 is a schematic view illustrating a fabrication process (first fabrication).
Fig. 10 is a schematic view illustrating the fabrication process (second fabrication).
Fig. 11 is a schematic view illustrating the fabrication process (third fabrication).
Fig. 12 is a schematic view illustrating a degreasing process.
Fig. 13 is a schematic view illustrating an impregnation process.

### EMBODIMENTS OF THE INVENTION

A honeycomb structure according to one embodiment will now be described.

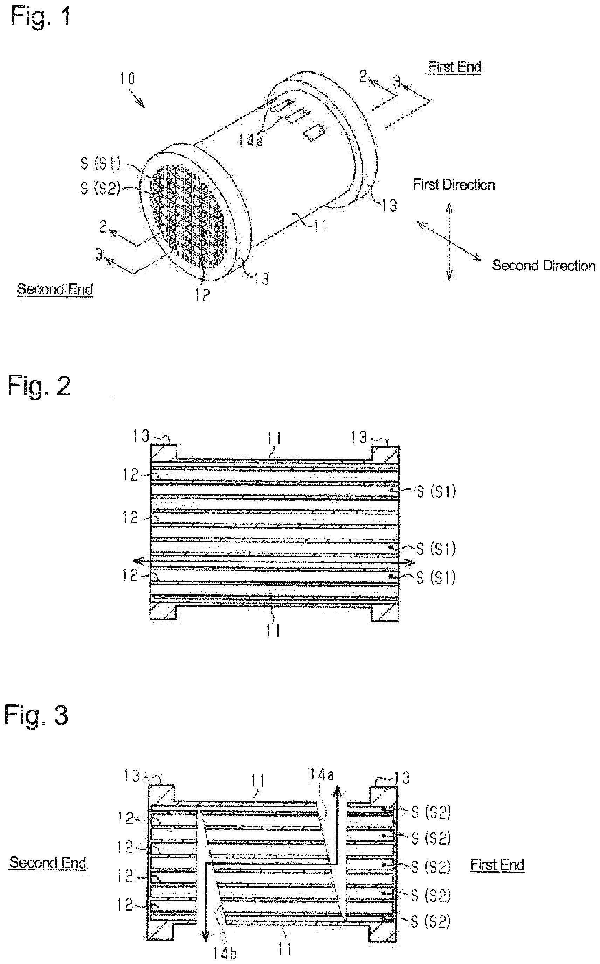

As shown in Fig. 1, a honeycomb structure 10 includes a tubular circumferential wall 11 and partition walls 12 forming a honeycomb-shaped cross-section and defining a plurality of cells extending inside the circumferential wall 11 in an axial direction of the circumferential wall 11. The circumferential wall 11 has two ends. An annular rib 13 projects outward in a radial direction from each end of the circumferential wall 11.

As shown in Figs. 1 to 3, the cells S, which are defined by the partition walls 12, include two types of cells, namely, a first cell S1 that has two open ends and a second cell S2 that has two sealed ends. As shown in Fig. 1, the cells S that are aligned in a first direction (vertical direction of Fig. 1) are all of the same cell type. The cells S that are adjacent to each other in a second direction (front-rear direction relative to plane of Fig. 1) orthogonal to the first direction are of different types.

As shown in Figs. 1 and 3, in the honeycomb structure 10, the second cells S2 portions aligned in the first direction (rows of second cells S2) each include a first connection portion 14a and a second connection portion 14b. The first connection portion 14a and the second connection portion 14b extend in the first direction and connect the adjacent second cells S2 in the first direction.

The first connection portions 14a are arranged close to a first end of the honeycomb structure 10. An end (basal end) of the first connection portion 14a at one side (upper side in Fig. 3) in the first direction opens in the circumferential wall 11. An end (distal end) of the first connection portion 14a at the other side (lower side in Fig. 3) reaches the second cell S2 located farthermost in the first direction.

The second connection portions 14b are arranged close to a second end of the honeycomb structure 10. An end (basal end) of the second connection portion 14b at one side (lower side in Fig. 3) in the first direction opens in the circumferential wall 11. An end (distal end) of the second connection portion 14b at the other side (upper side in Fig. 3) reaches the second cell S2 located farthermost in the first direction.

In this manner, first flow passages and second flow passages are formed in the honeycomb structure 10. Each first flow passage is constructed by one of the first cell S1 and includes an inlet and an outlet formed by the two ends of the cell S1 in the axial direction of the honeycomb structure 10. Each second flow passage is constructed by one of the second cells S2 and includes an inlet and an outlet formed by the openings of the first connection portion 14a and the second connection portion 14b formed in the circumferential wall 11 of the honeycomb structure 10.

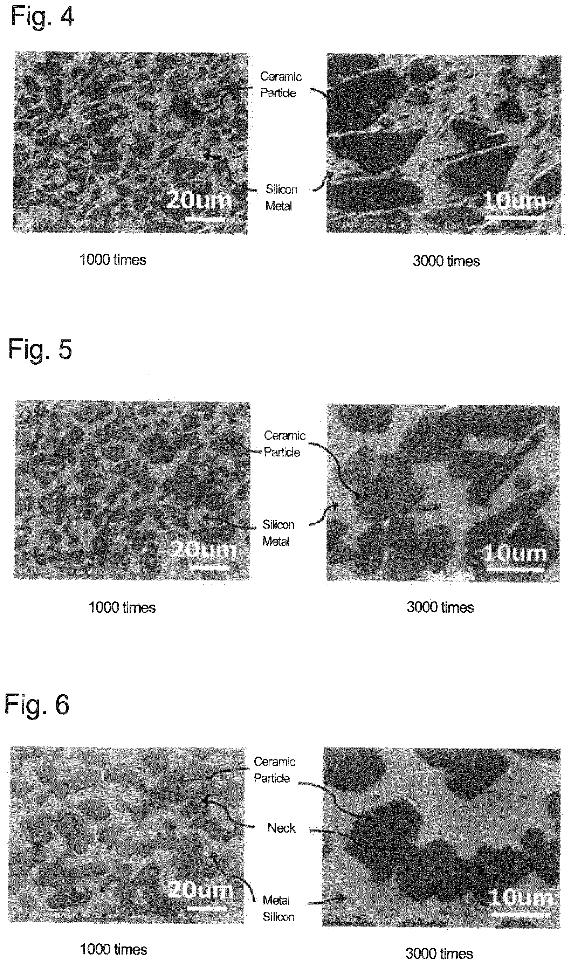

Fig. 4 is a photomicrograph showing a cross-section of the honeycomb structure 10. The honeycomb structure 10 includes a frame portion and a filling portion. The frame portion is formed by arranging ceramic particles in accordance with the shape of the circumferential wall, and the filling portion is formed by metal silicon filling gaps between the ceramic particles.

There is particularly no limit to the material forming the frame portion of the honeycomb structure 10, and materials used in a known honeycomb structure 10 may be used, for example, a carbide, such as silicon carbide, tantalum carbide, or tungsten carbide, or a nitride, such as aluminum nitride, silicon nitride, or boron nitride. Among these materials, it is preferable that silicon carbide be used.

Although not particularly specified, it is preferred that the average diameter of the ceramic particles be within a range from 10 to 50 µm. The average diameter of the ceramic particles can be measured through observation of a cross-section of the honeycomb structure 10 with an electron microscope.

The photomicrograph shown in Fig. 6 is, as a comparison, a photomicrograph showing a cross-section of a honeycomb structure obtained by performing firing after a degreasing process and then impregnating the fired body (hereafter, referred to as "sintered honeycomb structure"). In the sintered honeycomb structure, a link (neck) is formed by the ceramic particles that are linked by sintering. In a state linked by the necks, the ceramic particles form the frame portion, and the filling member fills gaps in the frame portion.

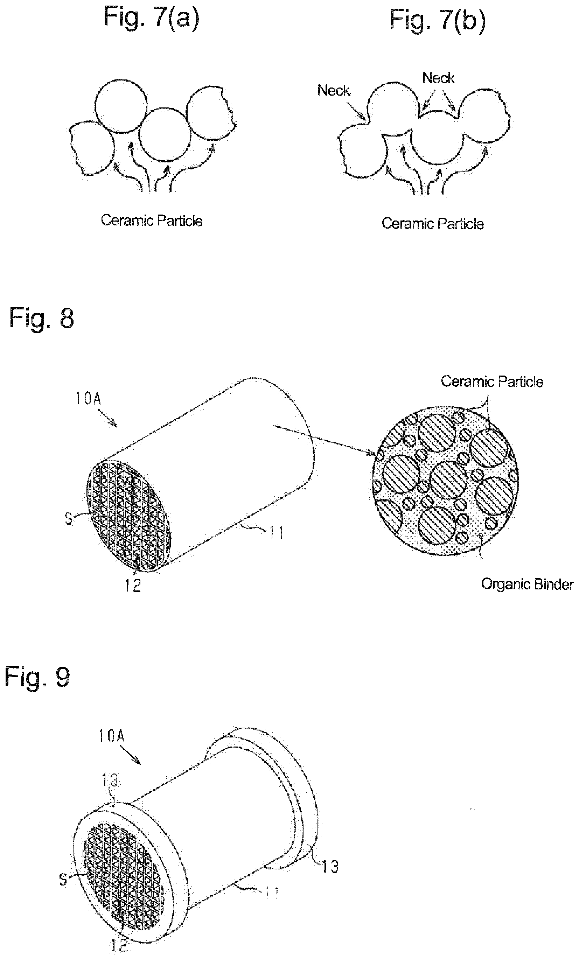

Figs. 7(a) and 7(b) are enlarged schematic views of a frame portion formed by ceramic particles arranged in the shape of the partition walls 12. Fig. 7(a) shows the frame portion of the honeycomb structure 10, that is, a non-sintered honeycomb structure. The ceramic particles forming the frame portion are in contact with one another. However, the ceramic particles do not include the necks that are formed through firing. Fig. 7(b) shows the frame portion of a sintered honeycomb structure. The ceramic particles forming the frame portion are linked by necks. The necks are the portions formed when the honeycomb structure is fired and the ceramic particles are sintered.

The frame portion shown in Fig. 7(a) is maintained by the filling portion in accordance with the shape of the partition walls 12. In other words, most of the ceramic particles forming the frame portion do not include the necks linked by the sintering, and the particles are arranged in a state contacting one another. The state of the contact arrangement is maintained by the filling portion. Accordingly, the shape of the partition walls 12 is maintained by filling the gaps between the ceramic particles with metal silicon.

It can be determined whether or not the ceramic particles forming the frame portion include the necks by, for example, checking whether the shape of the frame portion is maintained when melting metal silicon by performing a hydrofluoric acid treatment on the honeycomb structure. As shown in Fig. 7(a), when necks are not included between the ceramic particles forming the frame portion, the ceramic particles are arranged in a state contacting one another. Thus, after undergoing the hydrofluoric acid treatment, the shape of the frame portion is not maintained. In comparison, as shown in Fig. 7(b), when the ceramic particles forming the frame portion include the necks linked through sintering, the shape of the frame portion is maintained after undergoing the hydrofluoric acid treatment.

In the ceramic particles forming the frame portion, it is preferred that the ratio of the number of links (necks) of the ceramic particles after undergoing the hydrofluoric acid treatment to the number of the contact points of the ceramic particles before undergoing the hydrofluoric acid treatment (hereafter, referred to as "link rate") be less than or equal to 20%. When the link rate is less than or equal to 20%, resistance to strain is improved in a preferred manner. The number of contact points and links of the ceramic particles can be measured by observing the frame portion with an electron microscope.

The operation and advantages of the present embodiment will now be described.

For example, when there is a great difference in the temperature inside the honeycomb structure, strain occurs in the partition walls forming the honeycomb-shaped cross-section. In this case, some of the ceramic particles may crack, and the cracks may grow. A large portion of the sintered honeycomb structure is formed by ceramic particles that are linked by the necks. This may easily cause the cracks to grow thereby increasing strain. In the honeycomb structure of the present embodiment, linking of the ceramic particles is limited. Thus, even if some of the ceramic particles crack, the ceramic particles are smaller and thereby limit growth of cracks and reduce strain. Accordingly, in contrast with the sintered honeycomb structure, the honeycomb structure of the present embodiment has a higher Young's modulus, resists deformation, and improves strain resistance. Further, the gaps between the ceramic particles are filled with metal silicon. This obtains the same level of strength as the sintered honeycomb structure.

A method for manufacturing the honeycomb structure 10 of the present embodiment will now be described with reference to Figs. 8 to 13. The honeycomb structure 10 is manufactured by sequentially performing a molding process, a fabrication process, a degreasing process, and an impregnation process as described below.

### Molding Process

A clay-like mixture that includes the ceramic particles used in the known honeycomb structure 10, an organic binder, and a dispersion medium is prepared as the material for molding the honeycomb structure 10. As shown in Fig. 8, in the molding process, a mixture similar to that of the known honeycomb structure 10 is used to mold a molded body 10A that includes the tubular circumferential wall 11 and the partition walls 12 forming the honeycomb-shaped cross-section and defining the plurality of cells S extending inside the circumferential wall 11 in the axial direction of the circumferential wall 11. The molded body 10A does not include the annular ribs 13, and the two ends of each cell S are open. The molded body 10A, for example, may be extrusion-molded. A drying process is performed to dry the molded body 10A.

### Fabrication Process

The fabrication process is performed to fabricate the molded body 10A so that its outer shape is substantially the same as the outer shape of the honeycomb structure 10. This obtains a fabricated molded body 10B. The fabrication process includes a first fabrication that forms the ribs 13 on the molded body 10A, a second fabrication that forms the first connection portions 14a and the second connection portions 14b in the molded body 10A, and a third fabrication that seals the two ends of some of the cells S in the molded body 10A.

As shown in Fig. 9, in the first fabrication, the clay-like mixture used in the molding process is attached in a predetermined shape on the outer surface of the circumferential wall 11 of the molded body 10A to form the annular ribs 13. Then, a drying process is performed on the molded body 10A to dry the ribs 13.

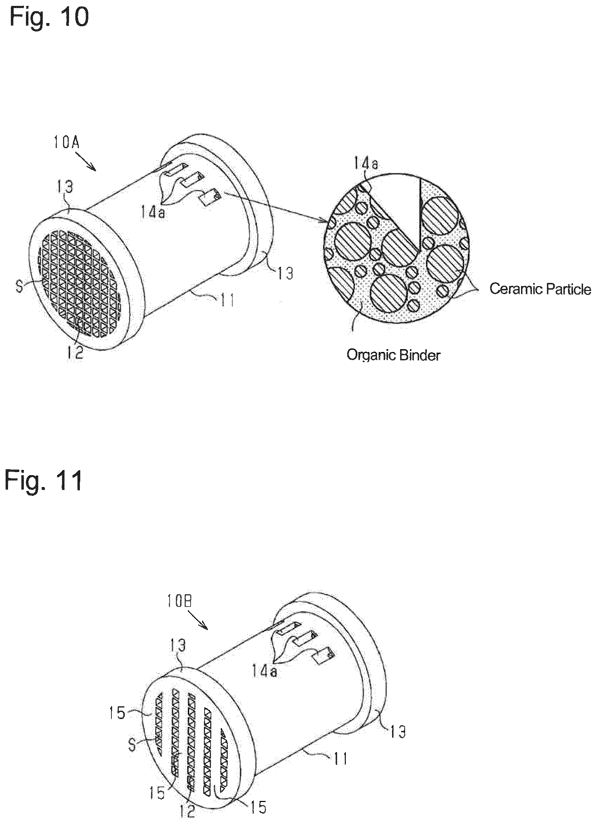

As shown in Fig. 10, in the second fabrication, the circumferential wall 11 and the partition walls 12 of the molded body 10A are partially removed, for example, by bringing a heated fabrication tool into contact with the molded body 10A to form the first connection portions 14a and the second connection portions 14b.

As shown in Fig. 11, in the third fabrication, the two ends of each second cell S2 among the plurality of cells S formed in the molded body 10A is filled with the clay-like mixture used in the molding process to form sealed portions 15. The sealed portions 15 seal the two ends of the corresponding cell S. Then, a drying process is performed on the molded body 10A to dry the sealed portions 15.

The fabricated molded body 10B is obtained by performing the fabrication process including the above first, second, and third fabrications.

### Degreasing Process

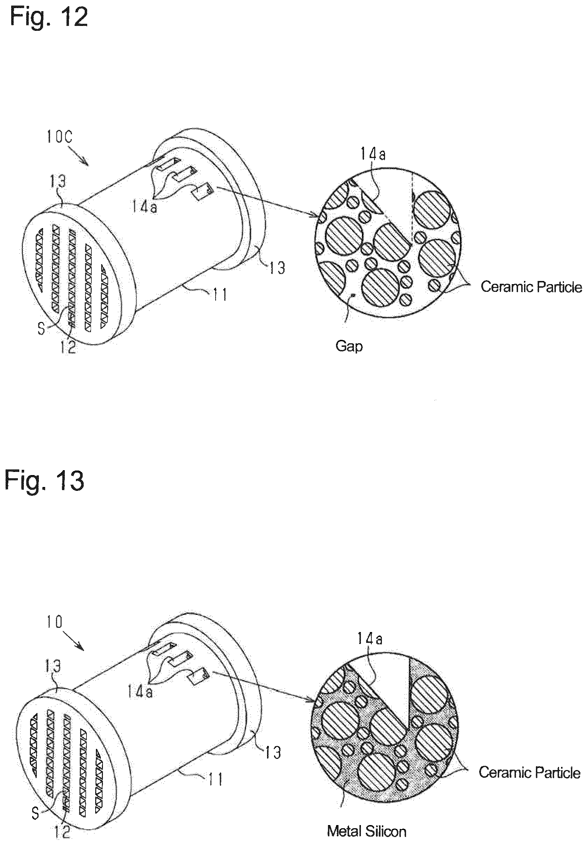

The degreasing process is a process that heats the fabricated molded body 10B to burn and remove the organic binder from the fabricated molded body 10B and obtain a degreased body 10C. As shown in Fig. 12, the degreased body 10C that includes gaps between the ceramic particles is obtained by performing the degreasing process to remove the organic binder from the fabricated molded body 10B.

### Impregnation Process

The impregnation process is performed to impregnate the inside of walls of the degreased body 10C with metal silicon. In the impregnation process, in a state contacting the degreased body 10C, a cluster of metal silicon is heated to the melting point of the metal silicon or higher (for example, higher than or equal to 1450°C). Consequently, as shown in Fig. 13, capillary action draws the melted metal silicon into the gaps between the ceramic particles, which form the walls of the degreased body 10C, so that the metal silicon is impregnated in the gaps.

The honeycomb structure 10 is obtained by performing the above impregnation process.

In the present embodiment, special temperature management is performed in the processes after the degreasing process. More specifically, the processes after the degreasing process are performed at a temperature lower than the sintering temperature of the ceramic particles in the mixture used in the molding process so as not to expose the fabricated molded body 10B and the degreased body 10C to a temperature higher than or equal to the sintering temperature. Thus, in the degreasing process, heating is performed at a temperature that is higher than or equal to the temperature at which the organic binder burns and lower than the sintering temperature. In the same manner, in the impregnation process, heating is performed at a temperature that is higher than or equal to the melting point of the metal silicon and lower than the sintering temperature.

The present embodiment may be modified as described below. Further, the structure of the above embodiment or modified examples described below may be combined.
- The outer shape of the honeycomb structure is not limited to a cylinder, and may be an elliptic cylinder or a square tube. In the present embodiment, the circumferential wall and the partition walls are formed by the same material. Instead, the circumferential wall and the partition walls may be formed by different materials. For example, the circumferential wall may be a coating layer that is formed around the outer circumference of the partition walls.
- The first cell S1 and the second cell S2 do not necessarily have to be adjacent in the second direction of Fig. 1, and may be, for example, arranged in the order of the second cell S2, the first cell S1, and the first cell S1 (repeated thereafter).
- The honeycomb structure may be a bundle of a plurality of tubular honeycomb members in which a plurality of cells defined by partition walls is arranged in the longitudinal direction and bonded by connection layers.

Technical concepts obtained from the above embodiment and the modified examples will now be described.

A honeycomb structure having a ceramic particle link rate that is less than or equal to 5%.

### EXAMPLES

Specific examples of the above embodiment will now be described.

### Examples

A mixture of the compositions described below was prepared.

Silicon carbide particles with average diameter of 15 µm (large particles): 52.5 parts by mass
Silicon carbide particles with average diameter of 0.5 µm (small particles): 23.6 parts by mass
Methylcellulose (organic binder): 5.4 parts by mass Glycerin (lubricant): 1.1 parts by mass
Polyoxyalkylene compound (plasticizer): 3.2 parts by mass Water (dispersion medium): 11.5 parts by mass

The mixture was used to mold a cylindrical molded body having a honeycomb structure that is 35 mm in diameter, 100 mm in length, 0.3 mm in thickness at the circumferential wall, 0.1 mm in thickness at the partition walls, and 0.94 mm in width at the cells. Then, a degreased body was obtained by heating the molded body at 450°C for five hours to remove the organic binder. Subsequently, a 20 g metal silicon plate was set on the degreased body and heated at 1550°C for seven hours under a vacuum to perform impregnation with metal silicon and obtain the honeycomb structure of example 1. Further, the honeycomb structure of example 2 was obtained by altering the heating conditions for the impregnation with the metal silicon so that the heating was performed at 1700°C for seven hours under an argon atmosphere. Figs. 4 and 5 are photomicrographs of the honeycomb structures of examples 1 and 2.

### Comparative Example 1

A molded body and a degreased body were obtained in the same manner as the examples. A fired body was obtained by heating the degreased body at 2200°C for three hours under an argon atmosphere. Subsequently, a 20 g metal silicon plate was set on the fired body and heated at 1550°C for seven hours under a vacuum to perform impregnation with the metal silicon and obtain the honeycomb structure of comparative example 1. Fig. 6 is a photomicrograph of the honeycomb structure of comparative example 1.

### Evaluation Tests

The flexural strength and Young's modulus of the honeycomb structures of examples 1 to 3 and comparative example 1 were measured. The results are shown in Table 1.

The flexural strength of the honeycomb structure was measured through the method described below.

Ten samples for the three - point flexural tests were cut out from the honeycomb structures of the examples and the comparative example with each sample having a size of 2 cells × 4 cells × 40 mm excluding the circumferential wall and the sealed portions. Then, a load was applied in a direction perpendicular to the main surface of each measurement sample (larger surface) to measure the breaking load (load that breaks the sample). The breaking loads of the ten three -point flexural test samples were measured. The average value was obtained as the flexural strength. The three-point flexural tests were performed with reference to JIS R 1601 using Instron 5582 with a 30 mm span length at a speed of 1 mm/min.

The Young's modulus of the honeycomb structure was measured through the method described below. A Young's modulus measurement sample having a size of 10 mm width × 50 mm length × 0.4 mm thickness excluding the circumferential wall and the sealed portions was cut out from the honeycomb structures of the examples and the comparative example. Subsequently, the samples were set on a Young's modulus measuring apparatus to measure the Young's modulus using the resonance method. A JE-RT model elastic modulus measuring apparatus (manufactured by Nihon Techno-Plus Co. Ltd.) was used as the measuring apparatus. The measuring was performed in an atmospheric environment at a room temperature.

A testing piece having a predetermined shape cut out from each of the honeycomb structures underwent hydrofluoric acid treatment to test whether the shape of the frame portion was maintained. When externally observed after the hydrofluoric acid treatment, if the shape of the honeycomb structure was maintained, such a state was referred to as "maintained", and if the honeycomb structure was broken and the shape was not maintained, such a state was referred to as "not maintained". Further, the number of contact points of silicon carbide particles per unit square before the hydrofluoric acid treatment and the number of contact points (links) of silicon carbide particles per unit square after the hydrofluoric acid treatment were measured with an electron microscope to calculate the link rate (%) that is the ratio of the number of links of silicon carbide particles after the hydrofluoric acid treatment to the number of contact points of silicon carbide particles before the hydrofluoric acid treatment. The link rates of examples 1 and 2 and comparative example 1 were 5%, 20%, and 95%, respectively.

The link rates were determined by taking photomicrographs of the silicon carbide particles at one hundred locations with a SEM at a magnification of 1000 times to visually check whether the links were formed between adjacent particles.

**Table 1**

| | Example 1 | Example 2 | Comparative Example 1 |
|---|---|---|---|
| Firing Temperature (°C) | - | - | 2100°C |
| Impregnation Temperature (°C) | 1550°C | 1700°C | 1550°C |
| Flexural Strength (MPa) | 64.3 | 64.5 | 64.7 |
| Young's Modulus (MPa) | 540 | 535 | 494 |
| Shape After Hydrofluoric Acid Treatment | Not Maintained | Not Maintained | Maintained |

The results in Table 1 show that the honeycomb structures of examples 1 and 2 have the same level of flexural strength as the honeycomb structure of comparative example 1. Further, the honeycomb structures of examples 1 and 2 have higher Young's moduli than the honeycomb structure of comparative example 1. Thus, the honeycomb structures of examples 1 and 2 resist deformation and have improved strain resistance.

### DESCRIPTION OF REFERENCE CHARACTERS

10) honeycomb structure; 10A) molded body; 10B) fabricated molded body; 10C) degreased body; 11) circumferential wall; 12) partition walls; 13) rib; 14a) first connection portion; 14b) second connection portion; 15) sealed portion.

## Claims

1. A honeycomb structure comprising
a tubular circumferential wall, and
partition walls forming a honeycomb-shaped cross-section and defining a plurality of cells extending inside the circumferential wall in an axial direction of the circumferential wall, wherein
the partition walls are constructed by a frame portion, formed by a plurality of ceramic particles arranged in a shape corresponding to the partition walls, and a filling portion, formed by metal silicon filling a gap between ceramic particles in the frame portion, and
the frame portion is maintained in a shape corresponding to the partition walls by the filling portion.

2. The honeycomb structure according to claim 1, wherein the ceramic particles are non-sintered.

3. The honeycomb structure according to claim 1 or 2, wherein a volume ratio of the ceramic particles to the metal silicon is from 60:40 to 40:60.

4. The honeycomb structure according to any one of claims 1 to 3, wherein the ceramic particles are silicon carbide particles.
